# EUROPEAN PATENT APPLICATION

(11) **EP 1 241 416 A2**
(43) Date of publication of application: **18.09.2002**
(21) Application number: 02076019.5
(22) Date of filing: 14.03.2002
(51) Int. Cl.: F24J 2/38

(54) **Solar panel system with means allowing the panels to follow the direction of the sun**

(30) Priority: 16.03.2001 IT TO010254
(71) Applicant: Cantore, Emilio, 10090 Reano (TO) (IT)
(72) Inventor: Cantore, Emilio, 10090 Reano (TO) (IT)
(74) Representative: Fiammenghi-Domenighetti, Delfina

(57) **Abstract**

A system (1) comprising solar panels (2, 3) is described, characterized in that the said solar panels (2, 3) are connected to a support structure (4) so as to be able to rotate about a straight line containing the longitudinal axis (Z-Z) of a fixed tank (5) which is filled with a liquid and exposed to the solar radiation and which is connected to one or more pistons (6) which are displaced by the thermal expansion of the liquid and are connected to the solar panels (2, 3) so as to cause them to rotate about their longitudinal axis (Z-Z). In the proximity of these panels (2, 3) there is mounted integrally therewith a screen (7) able to protect, from the sun's rays, a part (5p) of the said tank (5) arranged, with respect to the said axis (Z-Z), on the side from where the sun's rays arrive at the start of the day. The solar panels (2, 3) are provided with means able to bring them back into the initial position when the liquid contracts owing to the effect of a reduction in its temperature.

## Description

The present invention relates to the technological sector of systems which use solar panels for capturing the thermal energy irradiated by the sun for both direct and indirect use as electric energy produced by means of the photovoltaic effect.

It is widely known that the effective output of these systems in terms of the quantity of energy recovered is directly proportional to the quantity of energy captured per unit of surface area which in turn depends on the angle of inclination of the solar radiation with respect to the capturing surface, being correspondingly smaller the more this angle of inclination differs from 90°.

In other words, once the panels are oriented so that they are struck by the solar radiation during the course of a day, in order to achieve a greater efficiency it would be necessary to incline the panels gradually so that, following the associated path of the sun, they are arranged at all times perpendicularly with respect to the solar radiation itself. At present it is attempted to achieve this result, in particularly sophisticated installations, by means of electrically operated servo-mechanisms controlled by sensors which detect in each instant the relative position of the sun with respect to the panels.

These types of systems, however, involve considerable costs which, added to the already significant intrinsic costs of solar panels (in particular those of the photovoltaic cell type) increase excessively the time required for amortization of said costs, which makes the use of solar panel systems for the recovery of "clean" energy problematic and in certain cases even impractical.

The inventor of the present invention has devised a low-cost and easily realizable solution which uses part of the solar energy also for moving the solar panels in such a way as to keep them constantly oriented with respect to the sun in the most convenient manner, i.e., as already explained above, keeping them constantly as close as possible to a perpendicular position with respect to the straight line joining the sun and centre of the solar panel.

For this purpose, said solution makes use of the thermal expansion of a liquid contained in a tank exposed to the rays of the sun, causing it to act upon the end of one or more pistons, displacing them in a linear manner. These pistons are connected, by means of transmission and/or multiplication members of a known type, to the said panels and cause them to rotate about the longitudinal axis of the abovementioned tank.

In order to obtain the desired effect, the inventor has mounted, in the vicinity of the said tank and in a suitable position, a screen which protects the latter partially from the sun's rays and which is integral with the solar panels in terms of their rotational movement. This screen is designed dimensionally and positionwise so that, when the sun moves along its associated trajectory and strikes with its rays a part of the said tank with an improved inclination, the action of the said pistons causes rotation of the panel/screen assembly so as to reduce the tank part which is exposed to the sun's rays, preventing a further increase in the thermal exchange between the sun's rays and the tank so as to prevent further expansion of the liquid contained therein and therefore, as regards that mentioned above, further rotation of the solar panels which, for each position of the sun, thus tend to remain perpendicular to its rays.

When, with the setting of the sun, the solar radiation diminishes, the solar panels, owing to their own weight which is suitably distributed, or suitable means designed for this purpose, return into the position which they occupied at the start of the day, overcoming the resistance of the said pistons which are acted on by the liquid in the tank to a decreasing extent with the reduction in its temperature. The present invention in fact relates to a system comprising one or more solar panels as described in the accompanying Claim 1.

Hereinbelow there follows a description of a preferred example of embodiment of a system according to the invention chosen from among the various systems available for a person skilled in the art adopting the teachings contained in the said Claim 1. During the course of the abovementioned description reference will also be made to the accompanying drawings which show:
- in Figure 1 a perspective view of the said example of embodiment of a system according to the invention;
- in Figure 2 the cross section of the system according to Figure 1, which shows the positions assumed by the component parts following the movement of the sun.

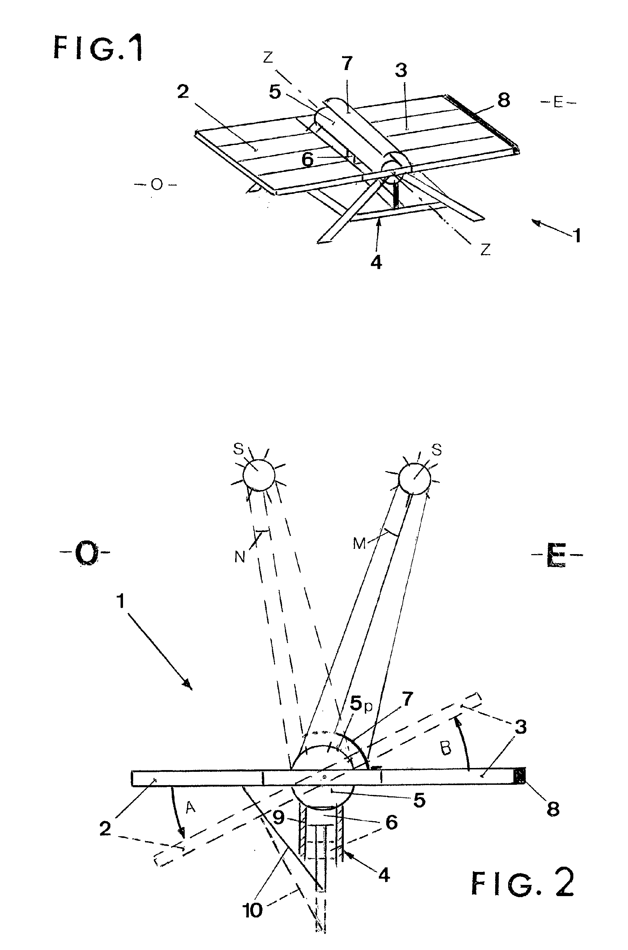

If we consider Figures 1 and 2, in them it can be seen how a system 1 according to the invention comprises firstly one or more solar panels, and preferably two panels, 2, 3, as shown in the drawings, arranged in a coplanar manner on opposite sides of a tank 5 which is preferably cylindrical and arranged with its longitudinal axis Z-Z lying in the plane of the two solar panels 2, 3.

Both the panels and the said tank 5 are connected to a support structure 4, but, whereas the tank 5 is. rigidly fixed on it, the solar panels 2, 3 are connected thereto so as to be able to rotate about the longitudinal axis Z-Z of the tank 5 itself.

The system, for obvious directional considerations, must be positioned with the said longitudinal axis in the North-South direction and with the solar panels 2, 3 arranged perpendicularly relative thereto, i.e. in the East-West direction, as shown in the drawings.

A screen 7 which is coaxial with respect to the tank 5 is fixed integrally onto the panel 3 situated towards the East, i.e. lying, with respect to the said axis Z-Z, on the side from where the sun's rays arrive at the start of the day. This screen 7 has in the example shown a C-shaped cross section with the concavity directed towards the tank 5 and extends in the vicinity of the latter practically over the whole length thereof, so as to cover a part 5p of the external surface of the tank itself, preventing the solar radiation from striking it.

The said tank 5 is filled with a liquid and communicates with a piston 6 slidable inside a cylinder 9.

When the sun S is situated in the position further to the East, or that shown further to the right in the drawing according to Figure 2, it strikes the tank 5 with its rays contained in the sector M, but, when the sun, owing to the effect of rotation of the earth, moves towards the West, reaching the position shown further to the left in the drawing, it strikes the tank 5 with the rays contained in another sector N having a greater amplitude and arranged in a mean direction oriented with an angle of incidence closer to the perpendicular, exchanging a greater quantity of heat with the tank 5, thus causing expansion of the liquid contained therein, which pushes the piston 6 downwards.

The latter is connected to the solar panels 2, 3 by means of transmission and multiplication members 10 of the known type in such a way that, when it moves downwards, it causes a rotation A of the panel/screen assembly which moves into the position shown in broken lines in the drawing.

The screen 7, consequently, moves so as to tend to cover a greater portion of the external surface of the tank 5, thereby increasing the surface area of the part 5p covered by it, until, despite the improved conditions of incidence of the radiation, there is no longer any increase in the temperature of the liquid contained therein.

The piston 6, and consequently the panels 2, 3, therefore remain substantially fixed in the position thus reached, which is that in which the panels 2, 3 are arranged more perpendicularly with respect to the direction of the sun's rays.

With the passing of time, if the sun S moves further towards the West, the sequence described hitherto occurs again, with renewed rotation of the solar panel/screen assembly, thus bringing the system 1 into an equilibrium condition, with the solar panels 2, 3, after performing a further rotation, being located again as close as possible to the perpendicular position with respect to the solar radiation.

It has thus been possible to provide a system 1 in which, automatically and without any external aid involving dissipation of energy, the solar panels 2, 3 are constantly arranged during the day in the manner most convenient for the efficiency of the system, namely perpendicularly with respect to the sun's rays.

Finally, when the sun sets, the liquid contained in the tank 5 cools and, as a result of the inherent weight of the panels - the weight of the panel located further to the East (namely the panel directed towards the point from where the sun's rays arrive at the start of the day) being especially increased by means of a ballast 8 or systems with a similar effect - the panels 2, 3 themselves and therefore the piston 6, also, are brought back into their initial position, ready for a new day's operation.

With the system provided in accordance with the invention, an energetic efficiency, in terms of the quantity of solar energy recovered, even more than 30% greater than that which can be obtained with conventional fixed solar panel systems, is obtained. Furthermore, this is obtained using a simple and low-cost technology which does not require particular maintenance.

As regards the abovementioned transmission and multiplication members 10, which are shown only schematically in the drawing of Figure 2, they may consist of chains and toothed wheels, belts and pulleys or other systems which are well known to persons skilled in the art for applications of the type described above.

It must be pointed out that the inventor envisages the possibility of varying the multiplication ratio of the said transmission and multiplication members in accordance with the seasons, in order to obtain the same "tracking" effect of the system despite the different quantities of heat absorbed by the abovementioned tank 5 during the course of the day with the change in seasons. This variation may be performed using means and criteria which are known to persons skilled in the art.

## Claims

1. System (1) comprising one or more solar panels (2, 3) for capturing the thermal energy irradiated by the sun, **characterized in that** the said solar panels (2, 3) are connected to a support structure (4) so as to be able to rotate about a straight line containing the longitudinal axis (Z-Z) of a fixed tank (5) which is filled with a liquid and exposed to the solar radiation and which is connected to one or more pistons (6) which are moved linearly owing to the effect of thermal expansion of the said liquid and are connected to the said solar panels (2, 3) so as to cause them to rotate about the abovementioned longitudinal axis (Z-Z), there being mounted, in the proximity of these panels (2, 3) and integrally therewith, a screen (7) able to protect, from the sun's rays, a part (5p) of the said tank (5) arranged, with respect to the said axis (Z-Z), on the side from where the sun's rays arrive at the start of the day, the solar panels (2, 3) being provided with means able to bring them back into the initial position, overcoming the reaction of the said one or more pistons (6) when the said liquid contracts owing to the effect of a reduction in its temperature.

2. System according to Claim 1, in which the said solar panels (2, 3) are two in number and are arranged in a coplanar manner on opposite sides of the said tank (5), the panel (3) thereof directed towards the point from where the sun's rays arrive at the start of the day having a weight greater than that of the other panel (2).

3. System according to one of the preceding claims, in which there is a single piston (6) and said piston is connected to the solar panels (2, 3) by means of transmission and multiplication members (10).

4. System according to Claim 3, in which the said transmission and multiplication members are provided with means which, when they are actuated, modify their multiplication ratio.

5. System according to one of the preceding claims, in which the said tank (5) is substantially cylindrical and the said screen (7) which protects it partly from the sun's rays extends coaxially thereto over the whole of its length and has a C-shaped cross section with the concavity directed towards the tank (5) itself.
